# EUROPÄISCHE PATENTANMELDUNG

(11) **EP 1 221 585 A2**
(43) Veröffentlichungstag der Anmeldung: **10.07.2002**
(21) Anmeldenummer: 01130405.2
(22) Anmeldetag: 20.12.2001
(51) Int. Cl.: G01C 21/26

(54) **Navigationsvorrichtung**

(30) Priorität: 05.01.2001 DE 10100407
(71) Anmelder: ROBERT BOSCH GMBH, 70442 Stuttgart (DE)
(72) Erfinder: Barkowski, Andre, 38228 Salzgitter (DE); Heinemann, Andreas, 31180 Giesen (DE); Schloegl, Dietmar, 31079 Sibbesse (DE)

(57) **Zusammenfassung**

Um eine Navigationsvorrichtung (100) zu schaffen, die den Führer eines Fortbewegungsmittels auch nach Verlassen des Fortbewegungsmittels, das heißt außerhalb des Fortbewegungsmittels in adäquater Weise bei der Orientierung sowie bei der Vermittlung ortsgenauer Angaben unterstützt, die trotz der Implementierung modernster Komponenten erschwinglich bleibt und deren Funktionalität sich gut mit der Funktionalität bereits bestehender fortbewegungsmittelgebundener Navigationssysteme ergänzt, wird vorgeschlagen, daß die Navigationsvorrichtung (100)
- mobil und/oder tragbar ausgebildet,
- einem fortbewegungsmittelgebundenen Navigationssystem (200) zugeordnet und/oder als modularer Bestandteil einem fortbewegungsmittelgebundenen Navigationssystem (200) entnehmbar und
- für den Daten- und Informationsaustausch mit dem fortbewegungsmittelgebundenen Navigationssystem (200) ausgelegt ist.

## Beschreibung

### Technisches Gebiet

Die vorliegende Erfindung betrifft eine Navigationsvorrichtung.

### Stand der Technik

In Fortbewegungsmitteln, wie beispielsweise in Flugzeugen, in Kraftfahrzeugen oder in Schiffen, fest installierte Navigationssysteme leiten einen Führer des Fortbewegungsmittels einfach, schnell und sicher an einen gewünschten Zielort, ohne daß der Führer des Fortbewegungsmittels vorher aufwendig eine Route planen und entsprechendes Kartenmaterial erwerben bzw. studieren muß.

Hierzu liegen entsprechende, beispielsweise auf Karten, Landkarten oder Straßenkarten basierende Navigationsdaten im Navigationssystem - etwa auf CD-ROM (= Compact Disc Read-Only Memory) gespeichert - vor. Das Navigationssystem nutzt beispielsweise GPS (= Global Positioning System), um den momentanen Standort des Fortbewegungsmittels festzustellen und entsprechende Navigationsanweisungen zu berechnen, die zu einem vorbestimmten Ziel führen.

In diesem Zusammenhang beinhalten die Navigationsdaten vorzugsweise Daten über Straßen und Wege für Kraftfahrzeuge; hierbei kommen in den Navigationssystemen entsprechende Algorithmen zur Routenberechnung zum Einsatz, die aus der Vorgabe eines Ausgangspunkts und eines Zielpunkts zusammen mit den gespeicherten Navigationsdaten eine optimale Route zur Fahrt vom Ausgangspunkt zum Zielpunkt errechnen.

Derartige Algorithmen zur Routenberechnung stützen sich beispielsweise auf sogenannte Bestwege-Algorithmen, die aus der Graphentheorie bekannt sind und an die besonderen Anforderungen für den Einsatz in autarken fortbewegungsmittelgebundenen Navigationssystemen angepaßt werden.

Im Zusammenhang mit derartigen fortbewegungsmittelgebundenen Navigationssystemen erweist es sich jedoch als wesentlicher Nachteil, daß eine fortbewegungsmittelexterne Fortsetzung der Navigation bislang nicht möglich ist. Muß der Führer des Fortbewegungsmittels beispielsweise, nachdem er sein Fortbewegungsmittel abgestellt hat, den letzten Teil des Weges zu Fuß zurücklegen, so kann er durch das an das Fortbewegungsmittel gebundene Navigationssystem hierbei nicht mehr unterstützt werden.

Auch die Vermittlung ortsgenauer Angaben von Reiseführerinformationen oder dergleichen scheitert konventionellerweise an der Tatsache, daß das Navigationsgerät im Fahrzeug zurückbleibt; schließlich wird auch die Orientierung bei der Rückkehr des Führers des Fortbewegungsmittels zu seinem Fortbewegungsmittel durch die Nichtverfügbarkeit des Navigationssystems erheblich erschwert.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, eine Navigationsvorrichtung bereitzustellen, die den Führer eines Fortbewegungsmittels auch nach Verlassen des Fortbewegungsmittels, das heißt außerhalb des Fortbewegungsmittels in adäquater Weise bei der Orientierung sowie bei der Vermittlung ortsgenauer Angaben unterstützt.

In diesem Zusammenhang zielt die vorliegende Erfindung darauf ab, eine Navigationsvorrichtung zur Verfügung zu stellen, die trotz der Implementierung modernster Komponenten erschwinglich bleibt und deren Funktionalität sich gut mit der Funktionalität bereits bestehender fortbewegungsmittelgebundener Navigationssysteme ergänzt.

Diese Aufgabe wird gemäß der Lehre der vorliegenden Erfindung durch eine Navigationsvorrichtung mit den im Anspruch 1 genannten Merkmalen gelöst. Vorteilhafte Ausgestaltungen und zweckmäßige Weiterbildungen des vorliegenden Verfahrens sind in den Unteransprüchen gekennzeichnet.

Mithin ist der Kern der vorliegenden Erfindung in dem Kriterium zu sehen, daß ein mobiles, personenbezogenes und tragbares Zusatzgerät mit einer Erweiterung und Verbindung zu einem fortbewegungsmittelgebundenen Navigationssystem (sogenanntes "InCar-Navigationssystem") geschaffen ist, das eine fahrzeugexterne Fortsetzung der Navigation ermöglicht, wodurch eine erhebliche Erweiterung der Navigationsfunktionalität gewährleistet ist. Mithin ist durch die vorliegende Erfindung eine signifikante Produktverbesserung bei Navigationssystemen verwirklicht, denn der Führer des Fortbewegungsmittels erfährt durch die Navigationsvorrichtung eine Navigationsunterstützung über die Fahrzeugführung hinaus.

Dies dient dem letztendlichen Auffinden des Zielpunkts, etwa zu Fuß nach Parken des Fortbewegungsmittels, und/oder der Rückkehr zum Fortbewegungsmittel, aber auch der ortsgenauen Ausgabe von Reiseführerinformationen. Hierzu kann die Navigationsvorrichtung gemäß der vorliegenden Erfindung unter anderem die technischen Voraussetzungen zur Bestimmung der eigenen momentanen Position aufweisen, beispielsweise mittels GPS (= Global Positioning System) und/oder mittels einer technischen Anbindung an das fortbewegungsmittelinterne Navigationssystem.

In zweckmäßiger Weise kann nach Abtrennung der modularen Navigationsvorrichtung vom fortbewegungsmittelgebundenen Navigationssystem die Positionsbestimmung aktiviert werden, so daß eine Zielführung - beispielsweise auf Grundlage der Himmelsrichtungen - zu den Zielen bzw. zurück zum Fortbewegungsmittel erfolgt.

Gemäß einer bevorzugten Ausgestaltungsform kann die vorliegende Navigationsvorrichtung in Verbindung mit dem fortbewegungsmittelgebundenen Navigationssystem für das Übernehmen verschiedener relevanter Daten und Informationen ausgelegt sein; bei diesen Daten und Informationen kann es sich beispielsweise um ein bzw. mehrere Ziele und/oder um eine Umgebungskarte handeln; erweiterte Informationen können etwa in der Fahrzeugposition, in einer bzw. mehreren Routen und/oder in beschreibenden Zusatzdaten und -informationen zur Umgebungskarte bestehen.

Wenn die vorliegende Navigationsvorrichtung in besonders erfinderischer Weise weitergebildet werden soll, so kann dies durch Implementation bzw. durch Integration mindestens eines Mobiltelephons in die mobile und tragbare Navigationsvorrichtung oder auch in das fortbewegungsmittelgebundene Navigationssystem geschehen. Hierdurch ist die Bereitstellung weiterer Zusatzinformationen gewährleistet, etwa von Verbindungsinformationen des fortbewegungsmittelgebundenen Navigationssystems oder von Verbindungsinformationen zur Umgebungskarte.

Gemäß einer vorteilhaften Ausführungsform der vorliegenden Erfindung ist bei Positionsbestimmung via GPS und bei weiterhin aktiver "InCar-Navigation" sowie bei existierendem Übertragungskanal, beispielsweise via Mobiltelephon, eine Erweiterung auf das sogenannte DGPS (= Differential Global Positioning System) möglich, um die Genauigkeit der Positionsbestimmung zu erhöhen.

Die vorliegende Erfindung betrifft schließlich auch ein Navigationssystem, aufweisend mindestens eine modulare Navigationsvorrichtung mit den vorstehend dargelegten Merkmalen.

### Kurze Beschreibung der Zeichnungen

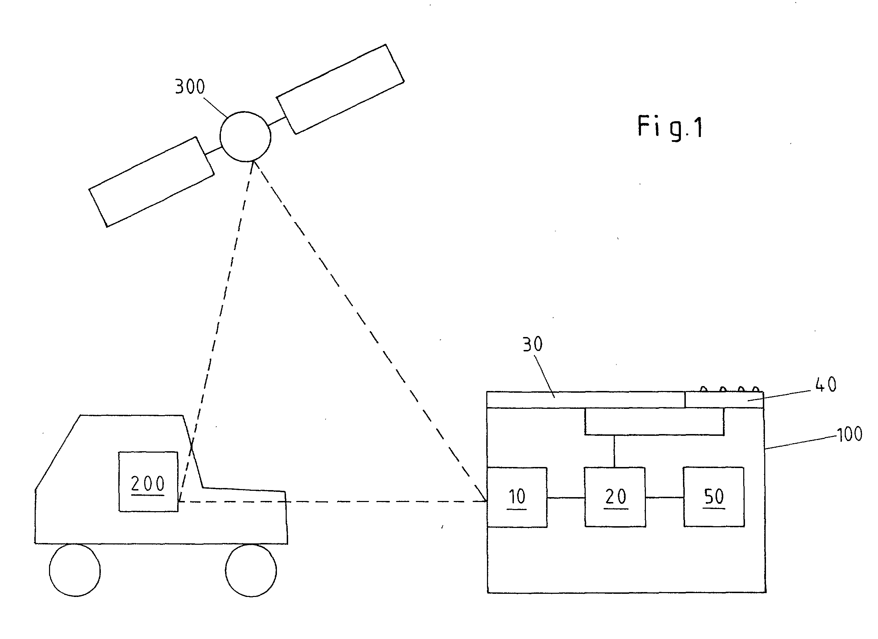

Weitere Ausgestaltungen, Merkmale und Vorteile der vorliegenden Erfindung werden nachstehend anhand des durch Figur 1 veranschaulichten Ausführungsbeispiels näher erläutert.

Es zeigt:
- Fig. 1: ein Ausführungsbeispiel einer Navigationsvorrichtung gemäß der vorliegenden Erfindung, in schematischer Prinzipdarstellung.

### Bester Weg zur Ausführung der Erfindung

In Figur 1 ist ein Ausführungsbeispiel einer personenbezogenen Erweiterung in Form einer Navigationsvorrichtung 100 gemäß der vorliegenden Erfindung in schematischer Prinzipdarstellung abgebildet. Diese Navigationsvorrichtung 100 ist mobil und tragbar ausgebildet, und zwar dergestalt, daß der Führer des im linken Teil der Figur 1 abgestellten Kraftfahrzeugs die Navigationsvorrichtung 100 mit sich führen kann. Hierdurch ist eine fahrzeugferne Fortsetzung der Navigation ermöglicht, wodurch eine erhebliche Erweiterung der Navigationsfunktionalität gewährleistet ist, denn der Führer des Kraftfahrzeugs erfährt durch die Navigationsvorrichtung 100 eine Navigationsunterstützung über die Fahrzeugführung hinaus, etwa beim letztendlichen Auffinden des Ziels, beispielsweise zu Fuß nach Parken des Fahrzeugs, und bei der Rückkehr zum Fahrzeug, aber auch bei der ortsgenauen Angabe von Reiseführerinformationen.

Die Navigationsvorrichtung 100 ist zu diesem Zwecke einem kraftfahrzeuggebundenen Navigationssystem 200 insofern zugeordnet, als die Navigationsvorrichtung 100 als modularer Bestandteil des Navigationssystems 200 ausgebildet ist und dem kraftfahrzeuggebundenen Navigationssystem 200 entnehmbar ist. Hierbei ist die Navigationsvorrichtung 100 für den Daten- und Informationsaustausch mit dem fortbewegungsmittelgebundenen Navigationssystem 200 ausgelegt, sofern sich dieses im abgestellten Kraftfahrzeug im aktiven Zustand befindet.

Die Navigationsvorrichtung 100 weist eine Empfangs-/Sendeeinheit 10 zum Empfangen von Daten und Informationen sowie zum Senden von Daten und Informationen auf. Der Daten- und Informationsaustausch erfolgt hierbei sowohl mit einer im Navigationssystem 200 implementierten Empfangs-/Sendeeinheit als auch unmittelbar mit einem Satelliten 300.

Letzterer Daten- und Informationsaustausch ermöglicht die Bestimmung der momentanen Position der Navigationsvorrichtung 100, denn die Empfangs-/Sendeeinheit 10 der Navigationsvorrichtung 100 ist für das Empfangen sowie für das Senden von Daten und Informationen auf GPS-Basis (GPS = Global Positioning System), insbesondere sogar auf DGPS-Basis (DGPS = Differential Global Positioning System), ausgelegt.

Die Kommunikation der Empfangs-/Sendeeinheit 10 der Navigationsvorrichtung 100 sowohl mit dem Navigationssystem 200 als auch mit dem Satelliten 300 erfolgt hierbei auf drahtloser Basis, was durch die entsprechenden gestrichelten Verbindungslinien in Figur 1 angedeutet ist (auch zwischen dem Navigationssystem 200 und dem Satelliten 300 erfolgt Daten- und Informationsaustausch; vgl. die entsprechende gestrichelte Linie zwischen dem Navigationssystem 200 und dem Satelliten 300).

Die Navigationsvorrichtung 100 weist des weiteren eine mit der Empfangs/Sendeeinheit 10 in Verbindung stehende Prozessoreinheit 20 auf. Diese Prozessor- oder Recheneinheit 20 ist zum Verarbeiten und Auswerten der empfangenen Daten und Informationen sowie zum Bereitstellen der zu sendenden Daten und Informationen vorgesehen. Angeschlossen an die Prozessoreinheit 20 ist eine Speichereinheit 50, mit der etwa ein Routennetz, insbesondere ein Straßennetz, abgebildet und gespeichert werden kann.

Um die empfangenen Daten und Informationen zu visualisieren, ist eine mit der Prozessoreinheit 20 in Verbindung stehende Anzeigeeinheit 30 zum Anzeigen der verarbeiteten und ausgewerteten Daten und Informationen, insbesondere zum Darstellen eines verkehrsbezogenen Ereignisses und/oder einer dem verkehrsbezogenen Ereignis zugeordneten Verkehrsmeldung, vorgesehen. Als Bedieneinheit zum manuellen und/oder akustischen Eingeben von Daten und Informationen durch den Führer des Kraftfahrzeugs ist neben dem Display 30 eine mit der Prozessoreinheit 20 in Verbindung stehende Benutzerschnittstelleneinheit 40 angeordnet.

Obwohl dies dem anhand Figur 1 veranschaulichten Ausführungsbeispiel (aus Gründen der Übersichtlichkeit der Darstellung) nicht explizit entnehmbar ist, kann zwischen das aktive Navigationssystem 200 und die mobile sowie tragbare Navigationsvorrichtung 100 ein Mobiltelephon gewissermaßen als Vermittlungsstation zwischengeschaltet werden. Hierzu ist das Mobiltelephon in die Navigationsvorrichtung 100 implementierbar bzw. integrierbar sowie mit der Navigationsvorrichtung 100 schaltungstechnisch verknüpfbar.

### Bezugszeichenliste

- 100: Navigationsvorrichtung
- 10: Empfangs-/Sendeeinheit
- 20: Prozessoreinheit
- 30: Anzeigeeinheit
- 40: Schnittstelleneinheit
- 50: Speichereinheit
- 200: Navigationssystem
- 300: Satellit

## Patentansprüche

1. Navigationsvorrichtung (100), die
- mobil und/oder tragbar ausgebildet,
- einem fortbewegungsmittelgebundenen Navigationssystem (200) zugeordnet und/oder als modularer Bestandteil einem fortbewegungsmittelgebundenen Navigationssystem (200) entnehmbar und
- für den Daten- und Informationsaustausch mit dem fortbewegungsmittelgebundenen Navigationssystem (200) ausgelegt ist.

2. Navigationsvorrichtung (100) gemäß Anspruch 1, **gekennzeichnet durch**
- mindestens eine Empfangs-/Sendeeinheit (10) zum Empfangen von Daten und Informationen und/oder zum Senden von Daten und Informationen;
- mindestens eine mit der Empfangs-/Sendeeinheit (10) in Verbindung stehende Prozessoreinheit (20) zum Verarbeiten und Auswerten der empfangenen Daten und Informationen und/oder zum Bereitstellen der zu sendenden Daten und Informationen; und
- mindestens eine mit der Prozessoreinheit (20) in Verbindung stehende Anzeigeeinheit (30) zum Anzeigen der verarbeiteten und ausgewerteten Daten und Informationen, insbesondere zum Darstellen mindestens eines verkehrsbezogenen Ereignisses und/oder mindestens einer dem verkehrsbezogenen Ereignis zugeordneten Verkehrsmeldung.

3. Navigationsvorrichtung (100) gemäß Anspruch 2, **gekennzeichnet durch** mindestens eine mit der Prozessoreinheit (20) in Verbindung stehende Schnittstelleneinheit (40) zum manuellen und/oder akustischen Eingeben von Daten und Informationen.

4. Navigationsvorrichtung (100) gemäß mindestens einem der Ansprüche 1 bis 3, **gekennzeichnet durch** mindestens eine mit der Prozessoreinheit (20) in Verbindung stehende Speichereinheit (50) zum Abbilden eines Routennetzes, insbesondere eines Straßennetzes.

5. Navigationsvorrichtung (100) gemäß mindestens einem der Ansprüche 1 bis 4, **gekennzeichnet durch** mindestens eine drahtlose Verbindung zum Navigationssystem (200).

6. Navigationsvorrichtung (100) gemäß Anspruch 5, **dadurch gekennzeichnet, daß** die drahtlose Verbindung auf Bluetooth und/oder auf GPRS (= General Packet Radio Service) und/oder auf GSM (= Global System for Mobile Communication) und/oder auf UMTS (= Universal Mobile Telecommunication System) basiert.

7. Navigationsvorrichtung (100) gemäß mindestens einem der Ansprüche 1 bis 6, **dadurch gekennzeichnet, daß** die Empfangs/Sendeeinheit (10) für das Empfangen und/oder für das Senden von Daten und Informationen auf GPS-Basis (GPS = Global Positioning System) ausgelegt ist.

8. Navigationsvorrichtung (100) gemäß mindestens einem der Ansprüche 1 bis 7, **dadurch gekennzeichnet, daß** die Empfangs/Sendeeinheit (10) für das Empfangen und/oder für das Senden von Daten und Informationen auf DGPS-Basis (DGPS = Differential Global Positioning System) ausgelegt ist.

9. Navigationsvorrichtung (100) gemäß mindestens einem der Ansprüche 1 bis 8, **dadurch gekennzeichnet, daß** die Navigationsvorrichtung (100) für die Bestimmung der momentanen Position ausgelegt ist.

10. Navigationsvorrichtung (100) gemäß mindestens einem der Ansprüche 1 bis 9, **dadurch gekennzeichnet, daß** mindestens ein elektronisches Adreßbuch, mindestens ein Mobiltelephon, mindestens ein Organizer oder dergleichen
- in die Navigationsvorrichtung (100) implementierbar bzw. integrierbar und/oder
- mit der Navigationsvorrichtung (100) verknüpfbar ist.

11. Navigationssystem (200), aufweisend mindestens eine modulare Navigationsvorrichtung (100) gemäß mindestens einem der Ansprüche 1 bis 10.
